# FASCICULE DE BREVET EUROPEEN

(11) **EP 2 930 471 B1**
(45) Date de publication et mention de la délivrance du brevet: **01.02.2017**
(21) Numéro de dépôt: 15161798.2
(22) Date de dépôt: 30.03.2015
(51) Int. Cl.: G01D 4/00

(54) **PROCÉDÉ ET INSTALLATION DE COMPARAISON DE CONSOMMATION D'EFFLUENTS SANS DIVULGATION DE DONNÉES DE CONSOMMATIONS MESURÉES**
VERFAHREN UND ANLAGE ZUM VERGLEICH DES VERBRAUCHS VON ABWASSER OHNE VERBREITUNG DER GEMESSENEN VERBRAUCHSDATEN
METHOD AND INSTALLATION FOR COMPARING EFFLUENT CONSUMPTION WITHOUT REVEALING THE MEASURED CONSUMPTION DATA

(30) Priorité: 31.03.2014 FR 1452838
(43) Date de publication de la demande: 14.10.2015
(73) Titulaire: Electricité de France, 75008 Paris (FR)
(72) Inventeur: Hebrail, Georges, 92330 Sceaux (FR); Allard, Tristan, 35000 Rennes (FR); Masseglia, Florent, 34990 Juvignac (FR); Pacitti, Esther, 34080 Montpellier (FR)
(74) Mandataire: Cabinet Plasseraud

(56) Documents cités:
- WO-A2-2012/004597
- GB-A- 2 488 625
- US-A1- 2011 271 352

## Description

### Domaine technique

L'invention concerne le domaine du suivi de consommation d'effluents au sein d'installations de souscripteurs, et notamment de réseaux électriques, de gaz ou d'eau d'utilisateurs ayant par exemple souscrit un abonnement pour de tels effluents.

### Etat de la technique

Il existe actuellement des procédés de comparaison de consommation d'un fluide observée au cours du temps dans une installation (réseau électrique d'habitation par exemple) et comparée à la consommation type du même fluide sur des installations distantes ayant des caractéristiques semblables (surface, activité, occupation, type de chauffage, etc.). Par exemple, les documents WO2012004597, US2011271352 et GB2488625 proposent ce type de procédés.

A cet effet, les procédés existants nécessitent généralement une phase d'initialisation au cours de laquelle les caractéristiques de l'installation sont renseignées par le souscripteur (ou par un opérateur) auprès d'un serveur distant. Des mesures récurrentes de consommation du fluide sont ensuite réalisées au sein de l'installation. Les données des mesures sont transmises périodiquement au serveur distant qui se charge de comparer les données reçues avec des données types de consommation d'installation. La comparaison des données de consommation mesurées avec les données types permet alors d'évaluer la consommation de l'installation. Sur la base de cette évaluation, le souscripteur peut être alerté en cas de consommation anormale et/ou être conseillé pour améliorer son comportement de consommation.

Selon d'autres réalisations existantes, les données de consommation d'un même type de fluide sont mesurées de manière synchronisée au niveau de différentes installations distantes. Ces mesures synchronisées de consommation sont envoyées à un système de gestion central qui regroupe ces données et détermine des comportements typiques de la consommation en fonction des caractéristiques des installations distantes qui ont transmis les données. Afin de qualifier la consommation d'une des installations distantes, une comparaison peut être réalisée entre les données de consommation reçues de l'installation et le comportement typique déterminé correspondant aux caractéristiques de cette installation.

Cependant, de tels procédés ne sont pas exempts de défauts. En effet, chacune des réalisations précédentes requiert que les données de consommation individuelle de chaque installation soient communiquées et rendues accessibles au public, tout au moins à un serveur central voire même à d'autres installations distantes.

Or, la divulgation de données personnelles auprès de tiers pose des problèmes de confidentialité pour les souscripteurs et conduit à des risques d'atteinte à leur vie privée. Typiquement, les données personnelles de consommation peuvent être interceptées par un tiers malveillant lorsqu'elles sont communiquées à un serveur distant, lequel tiers malveillant peut utiliser les données interceptées pour déterminer le comportement de consommation d'un utilisateur, la présence de ce dernier dans le logement, le nombre d'occupants, etc. A ce titre, les souscripteurs sont souvent réticents voire réfractaires à la mise en place de tels procédés au sein de leurs installations qui nécessitent la communication de données personnelles telles que leur consommation d'électricité, d'eau ou de gaz.

Il y a donc un besoin de mettre en place un procédé de comparaison de consommation permettant de conserver confidentielles les données du souscripteur.

L'invention vient améliorer la situation en ce sens.

### Résumé de l'invention

L'objet de l'invention est notamment de remédier aux inconvénients précités en proposant un procédé de comparaison de consommation d'installations de souscripteurs permettant notamment une comparaison des consommations de différentes installations sans que les données de consommation mesurées au sein de chaque installation ne soient divulguées à d'autres, ni même à un tiers de confiance. Le procédé permet ainsi de garantir la confidentialité des données individuelles de chaque installation et du comportement de consommation des souscripteurs.

A cet effet, un premier aspect de l'invention vise un procédé de comparaison de consommation d'effluents au sein d'installations de souscripteurs comprenant au moins les étapes de :
a) mesure de consommation d'un effluent au sein d'une installation de souscripteur ;
b) stockage des données de mesure de consommation dans une mémoire de l'installation ;
c) détermination en local d'au moins une courbe de consommation sur la base des données de mesure de consommation stockées ;
d) élaboration collaborative d'un ensemble de modèles de courbes de consommation d'effluent avec la participation d'installations de souscripteurs connectées à un réseau de communication étendu ;
e) réception de l'ensemble de modèles élaboré via le réseau de communication étendu ;
f) comparaison en local de la courbe déterminée avec l'ensemble de modèles reçu.

Les étapes a) à f) sont réalisées en local, c'est-à-dire au sein même de l'installation. Les données de consommation sont manipulées et utilisées *in situ* et ne sont pas rendues accessibles (comme c'est le cas dans l'état de la technique) à un système central distant ou à un tiers quelconque pour traiter et interpréter de telles données.

Le procédé permet ainsi de comparer les consommations d'une installation de souscripteur avec des consommations types d'installations (i.e. les modèles élaborés) en garantissant la confidentialité des données individuelles de chaque installation.

Il est entendu par effluent tout fluide en provenance d'une source et dont une consommation peut être mesurée en fonction d'un écoulement par rapport à la source. Typiquement, l'effluent peut être de l'électricité, du gaz, de l'eau, des déchets, de l'énergie renouvelable ou autre.

L'installation de souscripteur peut être tout type de logement, bâtiment industriel ou d'établissement collectif (hôpital, hôtel, etc.).

Un souscripteur peut être une personne physique ou morale qui a par exemple souscrit un abonnement auprès d'un fournisseur d'effluent, voire d'un collecteur d'eaux usées ou autre.

En outre, une ou plusieurs courbes de consommation peuvent être déterminées. Par exemple, plusieurs courbes sont calculées à partir de données de consommation horaires ou journalières qui sont stockées au sein de l'installation. De fait, lorsque plusieurs courbes sont déterminées pour une installation, ces plusieurs courbes peuvent être comparées en simultané aux modèles de courbes de consommation reçus.

Selon un mode de réalisation avantageux, la courbe déterminée à l'étape c) peut en outre être caractérisée selon au moins une catégorie d'installation correspondant à l'installation de souscripteur. A l'étape f), la courbe déterminée peut être comparée aux modèles qui, dans l'ensemble de modèles élaboré, correspondent à la même catégorie d'installation que l'au moins une catégorie caractérisant l'installation du souscripteur.

La ou les catégories d'installation permettent de discriminer le type d'installation à laquelle correspond :
- la ou les courbes déterminées ;
- les modèles de l'ensemble de modèles élaborés.

A titre d'exemple purement illustratif, si l'installation est un appartement de 75 m2, la courbe déterminée peut être caractérisée par une catégorie d'installation correspondant à : « un appartement de surface comprise entre 50 et 100 m2 ».

La vérification de l'adéquation des catégories d'installation de la courbe déterminée et du modèle identifié comme le plus proche permet de comparer de manière objective le comportement de consommation du souscripteur par rapport à des profils de consommation types (i.e. les modèles élaborés). S'il s'avère que la consommation mesurée pour l'installation est sensiblement éloignée du modèle le plus proche de même catégorie, des écarts de consommation peuvent alors être reconnus. A partir de ces écarts, le souscripteur peut détecter en local ses surconsommations et peut adapter son comportement de consommation en fonction (ou changer ses équipements défectueux par exemple) pour optimiser sa consommation d'effluent.

Les catégories d'installation peuvent notamment correspondre à des caractéristiques telles que :
- une surface du logement,
- un nombre d'occupants,
- un type de chauffage,
- un nombre de pièces,
- un type d'habitat (maison, appartement, local commercial, etc.),
- les équipements présents dans l'installation (chauffe-eau, lave-linge, etc.),
- ou autre.

Selon une autre réalisation possible, parmi l'ensemble de modèles élaboré, le modèle le plus proche de la courbe déterminé peut être identifié à l'étape f), indépendamment de catégories d'installations auxquelles correspondent respectivement la courbe déterminée et le modèle identifié.

Procédé selon la revendication 1, dans lequel à l'étape f), la courbe déterminée est comparée à l'ensemble de modèles élaboré indépendamment de catégories d'installation auxquelles correspondent respectivement la courbe déterminée et des modèles de l'ensemble de modèles.

Selon cette réalisation, une cohérence de la catégorie d'installation peut être vérifiée entre la consommation du souscripteur (courbe déterminée) et une consommation type (modèle le plus proche).

A titre d'exemple, si pour la consommation d'un appartement de 75 m², un modèle correspondant à une maison de 100 m² (avec un même nombre d'occupants que l'appartement) est identifié comme étant le plus proche, le souscripteur peut constater que sa consommation est anormalement élevée. Il peut alors adapter son comportement en fonction afin de concorder avec la consommation habituellement constatée pour la catégorie d'installation de son logement.

Ainsi, la consommation (instantanée ou d'une période donnée) et la catégorie d'installation du souscripteur peuvent être comparés en local par rapport aux modèles, permettant au souscripteur, à l'issue de l'étape f), de connaître :
- ses écarts de consommation par rapport à l'au moins une catégorie à laquelle correspond son installation, ou
- la catégorie d'installation à laquelle correspond sa consommation.

Selon une réalisation avantageuse, les modèles de courbes de consommation d'effluent peuvent être élaborés à l'étape d) par itérations successives d'un ensemble d'étapes auprès de plusieurs installations de souscripteurs connectées au réseau. Pour une itération courante, au sein de chaque installation, l'ensemble d'étapes peut comprendre :
- une réception de modèles de courbes d'effluent prédéfinis ou mis à jour à l'itération précédente de l'ensemble d'étapes ;
- parmi les modèles reçus, une identification en local du modèle de courbe le plus proche de l'au moins une courbe déterminée ;
- une construction en local d'une représentation locale chiffrée associant l'au moins une courbe déterminée avec le modèle de courbe le plus proche identifié ;
- une transmission au réseau de la représentation locale chiffrée ;
- une participation à la construction d'une représentation globale chiffrée correspondant à une agrégation de représentations locales chiffrées transmises par les plusieurs installations de souscripteurs ;
- un déchiffrement de la représentation globale chiffrée ; et
- une mise à jour, pour l'itération suivante de l'ensemble d'étapes, des modèles reçus en fonction des représentations locales chiffrées agrégées.

L'élaboration de l'ensemble de modèles peut être fonction de la représentation globale déchiffrée lorsqu'un critère d'arrêt des itérations de l'ensemble d'étapes est atteint.

Typiquement, le critère d'arrêt peut être :
- un nombre prédéfini d'itérations ;
- un écart maximum prédéterminé entre la représentation globale déchiffrée de l'itération courante et celle de l'itération précédente ;
- ou autre.

Les représentations locales et globale peuvent être constituées par des associations de données de courbes déterminées avec des données de modèles de courbe, par exemple sous la forme de matrice de données tels que des vecteurs de données.

Selon cette réalisation, les représentations locales sont construites à partir des courbes de consommation déterminées, avant d'être chiffrées pour transmission au réseau de communication en vue de la mise à jour des modèles. Les représentations locales ne sont pas lisibles par un tiers qui ne possède pas la clé de déchiffrement appropriée.

Ainsi, les courbes de consommation associées aux modèles ne sont pas accessibles. Les représentations locales peuvent être transmises de manière sécurisée à d'autres installations connectées au réseau de communication étendu, sans nécessiter *in fine* de divulgation des données mesurées au sein des installations.

Selon une réalisation avantageuse, les modèles peuvent en outre être mis à jour selon des catégories d'installation auxquelles correspondent les représentations locales chiffrées agrégées.

Les catégories d'installation de chaque représentation locale chiffrée peuvent être les catégories d'installation des courbes utilisées pour la construction de chaque représentation.

Les catégories d'installation des représentations locales chiffrées peuvent aussi être chiffrées. Les représentations locales chiffrées peuvent donc être enrichies de manière sécurisée avec des compléments d'information d'installation.

Les modèles de courbes peuvent ainsi être affinés au cours des itérations en fonction des consommations effectives mesurées au niveau des installations. Ils constituent des profils de consommation types qui sont évolutifs, sans que les données de consommation des souscripteurs ne soient divulguées au cours des différentes itérations.

Selon une réalisation possible, afin notamment de limiter le temps et les ressources calculs nécessaires pour mettre en oeuvre le procédé, l'étape de mise à jour des catégories des modèles peut être réalisée uniquement à la dernière itération de l'ensemble d'étapes (lorsque le critère d'arrêt est atteint typiquement).

Selon un mode de réalisation avantageux, le chiffrement des représentations locales et globale peut être réalisé à partir d'une clé de chiffrement commune aux installations de souscripteurs connectées au réseau de télécommunication étendu. Le déchiffrement peut être réalisé quant à lui de façon collaborative par un sous-ensemble d'installations de souscripteurs connectées audit réseau, chaque installation du sous-ensemble disposant d'une partie de clé de déchiffrement, les différentes parties constituant la clé de déchiffrement étant réparties entre les installations du sous-ensemble.

Le sous-ensemble d'installations peut être défini lors la répartition de la clé de déchiffrement entre les installations (en particulier, lors d'une phase de téléchargement des instructions du procédé).

En outre, selon ce mode de réalisation, les représentations locales chiffrées sont lisibles en intégralité uniquement à partir d'une méthode de déchiffrement collaboratif basée sur la clé de déchiffrement répartie. Le déchiffrement ne peut normalement pas être réalisé par une seule et même installation, ou un seul et même serveur distant. La notion de déchiffrement collaboratif empêche les prises de contrôle malveillantes, les tentatives de piratage ou d'accès aux données individuelles des installations, ou tout au moins, les complexifie significativement. On comprend que la sécurité des données et la confidentialité des comportements de consommation des souscripteurs sont dès lors encore améliorées. Le procédé est donc encore plus robuste aux actes malveillants.

Avantageusement, la clé de chiffrement commune est de type homomorphique additif.

Une telle clé de chiffrement permet un ajout direct de données à chiffrer, sans nécessiter de déchiffrement préalable de données déjà chiffrées, ni de nombres à ajouter. La clé de chiffrement commune de type homomorphique additif permet ainsi la construction de la représentation chiffrée globale sans nécessiter le déchiffrement des représentations locales chiffrées, i.e. sans divulgation de données personnelles de souscripteurs.

Selon un mode de réalisation avantageux, la construction de la représentation globale chiffrée peut être réalisée de proche en proche par l'intermédiaire d'une dissémination épidémique des représentations locales chiffrées entre les installations de souscripteurs via une infrastructure réseau distribuée (s'appuyant sur le réseau de communication précité par exemple).

Ainsi, les installations peuvent recevoir les modèles avec la contribution de leur voisin (i.e. autres installations connectée au réseau) et compléter les modèles en agrégeant leurs représentations locales chiffrées. L'infrastructure réseau distribuée peut être de type réseau pair à pair et peut comprendre une pluralité d'installations de souscripteurs.

Selon une réalisation avantageuse, chaque modèle correspond à une moyenne de courbes de consommation d'installations. Cette moyenne de courbes peut être fonction de :
- consommations types prédéfinies, ou de
- représentations locales chiffrées utilisées pour élaborer le modèle.

Avantageusement, du bruit peut être introduit dans la représentation globale chiffrée construite, et ce avant le déchiffrement réalisé à la fin de l'itération courante de l'ensemble d'étapes.

Le bruitage de la représentation globale chiffrée permet de brouiller le véritable comportement des souscripteurs sans que cela n'impacte significativement la pertinence des modèles élaborés (et donc la pertinence des résultats de comparaison selon l'étape f) susmentionnée).

Selon un deuxième aspect, l'invention vise une installation de souscripteur comprenant au moins :
- un module de mesure de consommation d'au moins un effluent ;
- une mémoire apte à stocker les données de mesure de consommation du module de mesure ;
- une interface de communication avec un réseau de communication étendu ;
- une unité de traitement de données connecté au module de mesure et à l'interface de communication.

Avantageusement, l'unité de traitement de données est apte à mettre en oeuvre le procédé de comparaison de consommation d'effluents décrit ci-avant.

Selon une réalisation avantageuse, la mémoire peut en outre être apte à stocker :
- une clé de chiffrement commune à des installations de souscripteurs connectées au réseau de télécommunication étendu, et
- une partie de clé de déchiffrement, les différentes parties constituant la clé de déchiffrement étant réparties entre les installations connectées au réseau.

En outre, la mémoire peut être apte à stocker des paramètres de bruit à introduire sur des données relatives à la consommation mesurée.

Avantageusement, l'installation peut être membre, via le réseau de communication étendu, d'une infrastructure réseau de type réseau pair à pair qui comprend une pluralité d'installations de souscripteurs.

La présente invention vise également un programme informatique comportant des instructions pour la mise en oeuvre du procédé précédemment décrit, lorsque ce programme est exécuté par une unité de traitement de données telle qu'un processeur.

Ce programme peut utiliser n'importe quel langage de programmation (par exemple, un langage objet ou autre), et être sous la forme d'un code source interprétable, d'un code partiellement compilé ou d'un code totalement compilé.

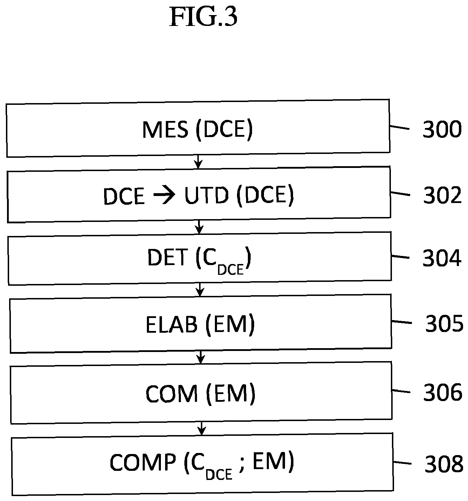

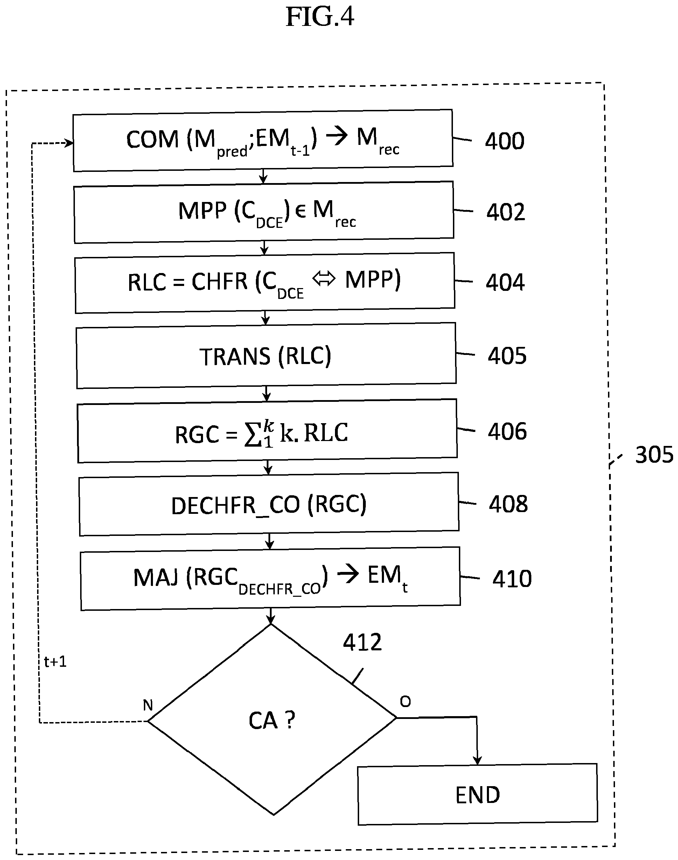

Les figures 3 et 4 décrites en détails ci-après, peuvent former des organigrammes de l'algorithme général d'un tel programme informatique.

### Brève description des figures

D'autres caractéristiques et avantages de l'invention apparaîtront à l'examen de la description détaillée ci-après, et des figures annexées sur lesquelles :
- la **figure 1** représente une pluralité d'installations de souscripteur mettant en oeuvre un procédé de comparaison de consommation d'effluent selon l'invention ;
- la **figure 2** représente un exemple de réalisation de l'installation de souscripteur ;
- la **figure 3** est un organigramme représentant un exemple de succession d'étapes de procédé de comparaison de consommation selon l'invention ; et
- la **figure 4** est un organigramme représentant un exemple du mode de réalisation de l'invention avec une succession d'étapes pour l'élaboration des modèles de courbes de consommation.

Pour des raisons de clarté, les dimensions des différents éléments représentés sur ces figures ne sont pas en proportion avec leurs dimensions réelles. Sur les figures, des références identiques correspondent à des éléments identiques pour les différents modes de réalisation exposés.

### Description détaillée

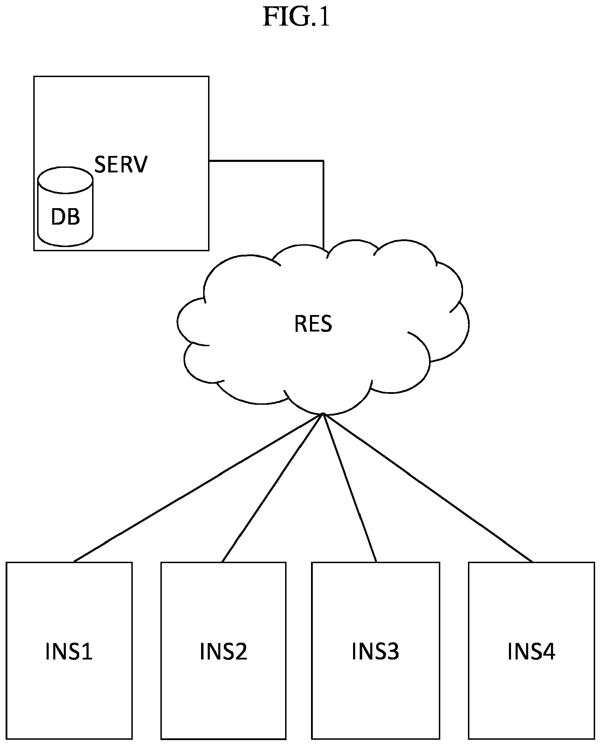

On se réfère tout d'abord à la **figure 1** sur laquelle est illustré un exemple de réalisation comprenant plusieurs installations de souscripteurs INS1, INS2, INS3, INS4. Les souscripteurs sont des personnes dont les installations INS1, INS2, INS3, INS4 ont un accès à des effluents tels que de l'électricité, des énergies renouvelables du gaz, de l'eau ou des déchets. Les installations peuvent être des logements de particuliers, des locaux d'entreprises ou des bâtiments industriels.

Les installations sont connectées entre elles par l'intermédiaire d'un réseau étendu de communication RES. Le réseau RES peut être de type réseau internet. Dans cet exemple, un serveur distant SERV est connecté au réseau RES. Ce serveur SERV comporte une base de données DB au sein de laquelle sont stockées des instructions de programme informatique permettant de mettre en oeuvre le procédé de comparaison de consommation lorsque ces instructions sont exécutées par une unité de traitement de données des installations.

En outre, la base de données DB comporte :
- une clé de chiffrement destinée à être commune à toutes les installations,
- une clé de déchiffrement destinée à être récupérée en partie auprès du serveur SERV par une installation et distribuée par le serveur SERV en différentes parties réparties parmi les installations, et
- des paramètres de bruit à introduire sur des données relatives à la consommation mesurée (typiquement, un niveau de bruit, un nombre d'installations devant participer au bruit, ou autre).

Ces données stockées sur la base DB peuvent être téléchargées auprès du serveur SERV par l'intermédiaire du réseau RES. Ce téléchargement peut être autorisé par le serveur SERV après une authentification mutuelle basée sur une vérification de signatures.

L'infrastructure réseau formée par les installations peut être une infrastructure de traitement distribué utilisant le réseau RES, comme une infrastructure réseau pair-à-pair par exemple (aussi dite infrastructure P2P). L'utilisation d'une telle infrastructure permet de s'affranchir de la présence d'un serveur central utilisé pour orchestrer les échanges de données entre les installations.

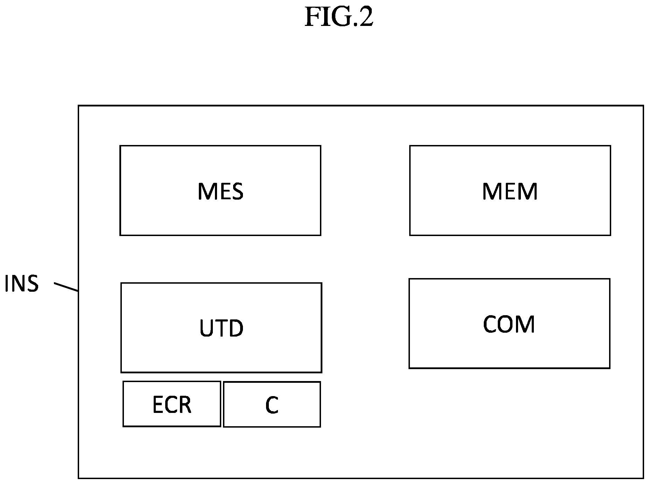

On se réfère maintenant à la **figure 2** sur laquelle est illustré un exemple de réalisation d'une installation de souscripteur INS apte à mettre oeuvre des étapes du procédé de comparaison de consommation. A cet effet, l'installation INS comprend :
- un module de mesure MES de consommation d'au moins un effluent, tel qu'un capteur de courant apte à détecter une consommation en électricité au sein de l'installation, un compteur d'eau, un compteur de gaz ou autre ;
- une mémoire MEM apte à stocker des données de mesure de consommation du module de mesure MES ;
- une interface de communication COM avec le réseau RES, cette interface COM pouvant être filaire ou sans-fil, par exemple via une passerelle donnant accès au réseau RES ;
- une unité de traitement de données UTD connectée au module de mesure MES et à l'interface de communication COM.

De préférence, la mémoire MEM est non-volatile (comme par exemple une mémoire morte) afin de conserver durablement les données de mesure de consommation du module MES, même en cas de coupure d'alimentation électrique générale au sein de l'installation (et de fait de la mémoire MEM).

L'unité UTD peut télécharger (suite à l'authentification mutuelle précitée) auprès du serveur distant SERV et stocker dans la mémoire MEM :
- les instructions du programme informatique relatives au procédé,
- les clés ou parties de clé de chiffrement et de déchiffrement, et
- les paramètres de bruit à introduire.

L'unité UTD peut en outre être prévue pour stocker dans la mémoire MEM les données de mesures reçues et des données temporaires pour réaliser les différentes étapes du procédé telles que décrites précédemment et détaillées ci-après.

L'unité UTD comporte par exemple :
- un processeur apte à interpréter des instructions sous la forme de programme informatique, ou
- une carte électronique dont les étapes du procédé de l'invention sont décrites dans le silicium, ou
- une puce électronique programmable comme une puce FPGA (pour « Field-Programmable Gate Array » en anglais), ou autre.

Une carte électronique ou une puce électronique programmable permet de s'assurer que les instructions relatives au programme informatique mettant en oeuvre le procédé ne sont pas manipulées par des tiers malveillants.

Cette unité UTD comporte une interface d'entrée pour la réception de données de mesures du module MES, et une interface de sortie pour la fourniture de commandes et de données traitées à l'interface de communication COM de l'installation. Enfin, l'unité UTD peut être installée dans un appareil (tel qu'un ordinateur ou un compteur électrique intelligent par exemple), l'appareil pouvant comporter par exemple un écran ECR et un clavier C pour permettre une interaction aisée avec un utilisateur.

La comparaison de consommation est réalisée en local au sein de chacune des installations via leur unité UTD respective.

L'élaboration des modèles de consommation peut quant à elle être réalisée de façon collaborative par les unités UTD des installations INS1, INS2, INS3 et INS4 faisant partie de l'infrastructure réseau distribuée, comme décrit ci-après relativement aux figures 3 et 4.

On se réfère maintenant à la **figure 3** sur laquelle sont illustrées les étapes d'un procédé de comparaison de consommation d'installation de souscripteur selon la présente invention.

Ce procédé peut tout d'abord comprendre la mesure de la consommation (étape 300) d'un effluent de l'installation telle qu'une consommation électrique. Pour ce faire, le module MES effectue une mesure de la consommation de l'effluent et détermine ainsi une donnée de consommation de l'effluent DCE.

Cette donnée DCE peut ensuite être transmise (étape 302) à l'unité UTD de l'installation pour être traitée. La donnée DCE mesurée est stockée dans la mémoire MEM et peut être utilisée pour calculer la consommation de l'installation en instantané ou au cours d'une période déterminée.

A partir de données de consommation d'effluents DCE stockées au sein de l'installation dans la mémoire MEM, le procédé peut comprendre la détermination en local (étape 304) d'une ou plusieurs courbes de consommation C_{DCE} de l'installation. A titre illustratif, une seule courbe C_{DCE} est déterminée dans cet exemple par l'unité UTD en fonction des données stockées en local dans la mémoire MEM. Les données utilisées pour le calcul de la courbe C_{DCE} peuvent notamment correspondre à un ensemble de mesures effectuées à des instants donnés. A titre d'exemple, la courbe C_{DCE} peut être calculée à partir de données DCE correspondant à des mesures de consommation d'effluent réalisées à chaque heure d'une même journée.

Selon une réalisation possible (décrit plus en détails ci-après), la courbe déterminée peut être basée sur des données de consommation organisées selon un vecteur de données ayant une ou plusieurs dimensions. La dimension du vecteur peut correspondre à un nombre déterminé de données de consommation mesurées au cours d'une période. Chaque composante du vecteur peut être une valeur réelle correspondant à un niveau de consommation mesuré. Par exemple, si la courbe de consommation est une courbe journalière, le vecteur peut comporter 24 valeurs réelles qui correspondent respectivement à une consommation mesurée à chaque heure de la journée.

En outre, la courbe C_{DCE} peut être caractérisée selon au moins une catégorie d'installation correspondant à l'installation INS. A titre d'exemple purement illustratif, la courbe C_{DCE} est caractérisée comme étant une maison de 150 m² avec un chauffage électrique. Tout autre paramètre relatif à l'installation ou à ses équipements pourrait toutefois être envisagé.

Selon une étape 305, un ensemble de modèles EM est élaboré de manière collaborative, avec la participation d'installations de souscripteurs connectées au réseau RES. L'ensemble de modèles EM peut être basé sur des modèles de courbes prédéfinis au sein des installations (typiquement des modèles fixes d'étalonnage ou d'initialisation) ou sur des modèles de courbes évolutifs qui, en particulier, sont mis à jour successivement par les installations selon les sous-étapes décrites relativement à la figure 4. Typiquement, l'ensemble EM comprend k modèles de courbes, k étant un nombre entier supérieur ou égal à 1.

La participation d'une installation peut se traduire notamment par :
- la réception de l'ensemble EM (complété par d'autres installations ou non),
- l'agrégation à l'ensemble EM d'une représentation chiffrée de la courbe déterminée pour l'installation ;
- l'envoi de l'ensemble EM avec la représentation agrégée.

Le procédé comprend en outre une réception (étape 306) de l'ensemble EM via l'interface COM avec le réseau RES. Cet ensemble EM a été complété par la participation des autres installations, voire même mis à jour par les installations.

De la même manière que la (ou les) courbe C_{DCE}, les modèles de l'ensemble EM peuvent être organisés sous la forme de vecteurs de données comme, par exemple, un vecteur comportant 24 valeurs réelles relatives à des niveaux de consommation type pour chaque heure de la journée.

A une étape 308, la courbe C_{DCE} est comparée en local (réalisée par l'unité UTD de l'installation) avec les k modèles de courbes de consommation d'effluent que comporte l'ensemble EM reçu.

La comparaison entre la consommation mesurée et des modèles de courbe est directement réalisée sur place, au sein même de l'installation, sans avoir à donner accès aux données personnelles du souscripteur à d'autres systèmes extérieurs, permettant ainsi de comparer les consommations d'une installation de souscripteur avec des consommations types d'autres installations en garantissant la confidentialité des données individuelles de chaque installation.

En outre, à l'étape 308, la courbe C_{DCE} et la catégorie d'installation du souscripteur peuvent être comparés (fonction COMP) en local par rapport aux catégories des modèles de l'ensemble EM. Le résultat de cette comparaison en regard des catégories peut permettre au souscripteur de détecter :
- des écarts de consommation par rapport au(x) modèle(s) de même(s) catégorie(s) que installation, ou
- la (ou les) catégorie d'installation à laquelle correspond la consommation mesurée *in situ.*

On se réfère maintenant à la **figure 4** sur laquelle sont illustrées une succession de sous-étapes pour l'élaboration de l'ensemble de modèles de courbes (étape 305).

Pour cette élaboration, une sous-étape 400 du procédé peut comprendre la réception de modèles M_{rec}. Ces modèles M_{rec} sont reçus via l'interface COM et peuvent correspondre à des modèles de courbes d'effluent prédéfinis M_{pred} ou mis à jour (noté EMₜ₋₁) à l'itération précédente t-1 des étapes 400 à 410.

Les modèles M_{pred} peuvent être des modèles par défaut, envoyés en tant que modèles de base, pour la première itération des étapes 400 à 410 par exemple.

Après la première itération, les modèles reçus peuvent être les modèles EMₜ₋₁ mis à jour précédemment. Ces modèles EMₜ₋₁ sont reçus en vue d'une mise à jour selon l'itération courante des étapes 400 à 410 (itération t).

Selon une sous-étape 402, le modèle de courbe le plus proche de l'au moins une courbe C_{DCE} est identifié parmi les modèles M_{rec}. Le modèle MPP peut être identifié par un calcul de distance entre la courbe C_{DCE} et les modèles M_{rec}, le modèle MPP étant le modèle ayant la plus faible distance avec la courbe C_{DCE}.

A une sous-étape 404, une représentation locale chiffrée RLC est construite par association de la courbe C_{DCE} avec le modèle le plus proche MPP. Le chiffrement CHFR de la représentation RLC peut être réalisé selon une clé de chiffrement de type homomorphique additif, commune à toutes les installations.

Selon un autre exemple possible, le modèle MPP peut être recherché uniquement parmi les modèles de même catégorie d'installation que celle du souscripteur (non représenté sur les figures).

Selon une sous-étape 405, la représentation RLC est transmise au réseau RES.

Puis au cours d'une sous-étape 406, l'installation participe à la construction d'une représentation globale chiffrée RGC correspondant à une agrégation d'autant de représentations locales RLC que d'installations participantes à cette construction pour l'itération courante.

Les représentations RLC sont agrégées de proche en proche, par l'intermédiaire d'une dissémination épidémique, par l'ensemble des installations participantes actives. Cette dissémination épidémique permet de réaliser des échanges de données et de calculer des sommes ou des moyennes de façon distribuée, et ce en limitant les échanges au voisinage de chaque installation (« voisinage » au sens de l'infrastructure réseau, et non au sens géographique ou du recoupement de caractéristiques des installations). Outre le fait que cette technique utilisée dans le procédé permet de s'affranchir de la centralisation des données (qui est utilisée par l'état de la technique), elle permet un bon fonctionnement du procédé que les installations voisines soient connectées ou non au réseau RES.

Selon une sous-étape non représentée sur l'organigramme, du bruit est introduit dans la représentation RGC construite avant de passer à la prochaine sous-étape.

Selon une sous-étape 408, la représentation RGC est déchiffrée de manière collaborative (notée ci-après RGC_{DECHFR_CO}) par l'intermédiaire de la clé de déchiffrement partagée en parties entre les installations.

A une sous-étape 410, la représentation RGC_{DECHFR_CO} est utilisée pour mettre à jour l'ensemble de modèles EM selon l'itération t (EMₜ). Par l'intermédiaire du déchiffrement, chaque modèle de l'ensemble EMₜ est mis à jour en calculant une moyenne des représentations RLC agrégées au cours de l'itération t.

Les représentations RLC peuvent en outre être enrichies et mises à jour selon les catégories d'installation auxquelles correspondent les courbes associées C_{DCE}. Chaque modèle de l'ensemble EMₜ peut aussi être enrichi et mis à jour selon les catégories d'installation des représentations RLC agrégées au cours de l'itération t. Ainsi, l'ensemble EMₜ permet ultérieurement au souscripteur (lors de l'étape 308) de savoir si sa consommation est typique ou non par rapport à la nature de son installation.

A une étape 412, il convient de vérifier si un critère d'arrêt CA est atteint (tel qu'un nombre d'itérations suffisant ou un écart maximum entre la représentation globale RGC courante et celle de l'itération précédente ou autre. En effet, le critère CA peut être déterminé pour qu'un nombre d'itérations minimum (une dizaine d'itérations par exemple) des étapes 400 à 410 soit réalisé afin d'ajuster les modèles en amont de la comparaison selon l'étape 308. Les modèles sont ainsi affinés et rendus plus fiables, itération par itération. Les résultats de la comparaison de l'étape 308 sont alors d'autant plus pertinents.

Si le critère CA n'est pas atteint (flèche N en sortie de l'étape 412), alors les étapes 400 à 410 sont réitérées (nouvelle itération t+1).

Si le critère CA est atteint, l'ensemble de modèles EM est élaboré et l'étape 305 est terminée.

Selon une réalisation possible, la mise à jour des catégories des modèles selon la sous-étape 410 peut être réalisée uniquement à la dernière itération de l'ensemble d'étapes 400 à 410, lorsque le critère d'arrêt CA est atteint.

Selon une réalisation possible du procédé, un algorithme de k-moyennes (ou k-means en anglais) peut être utilisé pour réaliser différentes étapes du procédé. A cet effet, k classes peuvent par exemple être fixées, k étant un nombre entier supérieur ou égal à 1. Chaque modèle correspond alors à une classe des k-means. Quatre objets peuvent être construits pour être diffusés de proche en proche sur le réseau RES auprès de chacune des installations INS1, INS2, INS3, INS4 :
- un ensemble de k vecteurs de données SUM ayant une dimension déterminée (de dimension 24 par exemple pour avoir une donnée de consommation par heure de la journée), chaque vecteur SUM correspondant à une somme de courbes déterminées et chiffrées relatives à un modèle ;
- un vecteur de données COUNT de k nombres entiers positifs chiffrés ayant pour rôle de décompter le nombre de courbes déterminées pour chacun des k vecteurs SUM ;
- un ensemble de k vecteurs CAT comportant autant de dimensions que de catégories d'installation possibles et, pour chaque modèle, le nombre (également sous forme chiffrée) de courbes associées ayant au moins une même catégorie d'installation ;
- un ensemble de k vecteurs MOD de données de dimension déterminée, et en particulier de même dimension que les vecteurs SUM, destiné à comporter les modèles de courbes de consommation type d'effluent sous forme non chiffrée ; le vecteur MOD pouvant être enrichi par autant de dimensions que de catégories d'installation possibles, qui peuvent contenir pour chaque modèle sous forme non chiffrée le nombre de courbes ou une proportion du nombre de courbes associées au modèle et présentant la catégorie d'installation correspondante.

Pour les vecteurs SUM, COUNT et CAT, les valeurs réelles ou entières comportées par ces vecteurs peuvent être chiffrées selon l'étape de chiffrement du procédé, notamment selon la clé de chiffrement précitée de type homomorphique additif Ainsi, les données des vecteurs SUM, COUNT et CAT ne sont pas accessibles, ou tout au moins difficilement, d'autant plus lorsque la clé de déchiffrement est répartie entre les installations.

Le vecteur MOD peut en revanche ne pas être chiffré afin d'être accessible à une installation pour toute comparaison avec une courbe déterminée C_{DCE}.

Au cours de chaque itération des étapes 400 à 410, les vecteurs SUM et COUNT sont calculés comme étant la somme des courbes associées à chaque modèle de proche en proche via le réseau RES selon la dissémination épidémique décrite ci-avant. Pour associer sa courbe au modèle le plus proche, chaque installation effectue en local la comparaison de la ou des courbes de consommation d'effluent déterminées avec les données des vecteurs MOD. Dès que le modèle le plus proche est identifié parmi les vecteurs MOD, la ou les courbes déterminées sont chiffrées et associées au modèle en question par ajout de la courbe aux vecteurs SUM de la classe la plus proche. Un vecteur nul peut être ajouté en simultané, toujours de manière chiffrée, aux vecteurs SUM des autres classes.

Dans les vecteurs COUNT, le compteur correspondant au modèle le plus proche est incrémenté de un (par exemple par ajout du chiffre 1 chiffré pour la classe correspondant au modèle le plus proche). Le chiffre 0 peut être chiffré et ajouté aux vecteurs COUNT correspondant aux autres classes.

Un nombre d'échanges minimum entre les installations peut être requis pour calculer par dissémination épidémique la représentation globale chiffrée RGC (ici SUM, COUNT et MOD à la fin de cette dissémination) à partir des représentations locales chiffrées RLC (ici les SUM, COUNT et MOD calculées par chaque installation à l'étape 404).

A cet effet et avant de passer à l'étape de comparaison (selon l'étape 308), il est requis que le critère d'arrêt CA précité soit atteint. Ce critère CA peut être un nombre d'itérations des étapes 400 à 410 de l'ordre de la dizaine par exemple ou une distance maximum (euclidienne par exemple) entre les modèles d'une itération N-1 et les modèles d'une itération N ou quand toutes les installations ont reçu les modèles transmis de proche en proche sur l'infrastructure réseau distribuée.

Lorsque les vecteurs SUM, COUNT et MOD ont convergé, l'itération courante N des étapes 400 à 410 est terminée et l'installation peut passer à l'itération suivante N+1.

Pour passer à la prochaine itération, il convient de mettre à jour les modèles de courbes et, à cet effet, il est mis en oeuvre par les installations le déchiffrement collaboratif précité grâce aux différentes parties de clé de déchiffrement réparties.

Les valeurs réelles déchiffrées des vecteurs SUM sont divisés par les valeurs entières des vecteurs COUNT afin d'obtenir les moyennes correspondant aux nouveaux modèles (vecteurs MOD) pour l'itération N+1 (étape 410). Les modèles de l'itération N+1 sont ensuite rediffusés de proche en proche sous forme non chiffrée aux installations de souscripteurs (suite à l'étape 410).

Il convient de noter que des variantes sont possibles et notamment que pour la mise en oeuvre du procédé, un quorum d'installations connectées au réseau RES peut être nécessaire.

Selon une réalisation possible, le procédé comprend en outre une étape effectuée à l'étape de chiffrement (étape 402). Suivant la même structure que les k ensembles de vecteurs SUM, COUNT et CAT, k ensembles de vecteurs chiffrés BSUM, BCOUNT et BMOD sont définis pour contenir du bruit introduit par chaque installation. Un tel bruit peut consister en une perturbation pour une ou plusieurs courbes déterminées : ajout d'une valeur réelle tirée aléatoirement dans une distribution de Laplace par exemple (approche nommée « differential privacy » en anglais). Les vecteurs de bruit BSUM, BCOUNT et BMOD locaux générés par chaque installation sont ensuite agrégés par dissémination épidémique pour former des vecteurs de bruit globaux à l'ensemble des installations. Toujours selon cette réalisation, les vecteurs de bruit (BSUM, BCOUNT et BMOD) sont ajoutés aux vecteurs (SUM, COUNT et CAT) avant la phase de déchiffrement.

Ainsi, les courbes déchiffrées ne représentent pas la réelle consommation de chacune des installations. L'introduction de la perturbation (dite « differential privacy ») sur les courbes chiffrées (les vecteurs SUM, COUNT et MOD chiffrées dans l'exemple décrit ci-avant) permet de garantir que les données ne sont pas déchiffrés telles quelles (ce qui peut survenir lorsqu'un petit nombre d'installations participent à une classe). La confidentialité des données échangées est de fait encore renforcée. Il convient de noter que l'effet du bruit introduit a un impact mineur voire nul sur la pertinence des modèles de courbes calculés car, avec un grand nombre de courbes, ce bruit introduit a tendance à être lissé lors du calcul d'une moyenne des courbes déchiffrées et bruitées.

Compte tenu des organigrammes décrits aux figures 3 et 4, les données de consommation du souscripteur ne sont manipulées qu'en local au sein de l'installation. En outre, les courbes déterminées C_{DCE} à partir de ces données sont chiffrées voire même bruitées lorsqu'elles sont transmises vers le réseau RES. Un tel procédé permet qu'aucune des mesures effectuées au sein d'une installation ne soit divulguée en dehors de l'installation.

Ainsi, la confidentialité des données individuelles du souscripteur est préservée tout en bénéficiant d'une comparaison de sa consommation par rapport aux autres installations ou des modèles prédéterminés. Différents services d'amélioration de la consommation d'effluent peuvent être proposés au souscripteur sans pour autant que ses données personnelles ne soient rendues accessibles à des tiers. Cette confidentialité des données de consommation est d'autant plus robuste lorsque les courbes de consommation déterminées sont soumises à l'ajout d'un bruit.

Par ailleurs, les courbes sont difficilement lisibles pour un tiers malveillant car elles sont chiffrées, et la clé de déchiffrement est répartie parmi les installations (déchiffrement collaboratif). De fait, un tiers malveillant ne peut déchiffrer à lui seul des courbes d'installations individuelles. Seule une coalition d'un ensemble de tiers malveillants pouvant rassembler l'ensemble des parties de clés de déchiffrement peut y parvenir. Ceci renforce encore la protection des données personnelles des souscripteurs.

Les modèles de courbes peuvent évoluer et être ajustés grâce au mécanisme itératif de mise à jour des modèles de courbes de consommation (étape 305). Ainsi, les modèles peuvent être affinés et constituer une représentativité pertinente de la consommation moyenne constatée au sein des installations de souscripteurs à un instant ou une période donnée.

L'invention a été décrite en référence à des modes de réalisations particuliers qui ne sont pas limitatifs. Bien entendu, la présente invention ne se limite pas à la forme de réalisation décrite à titre d'exemple et elle s'étend à d'autres variantes. Par exemple, le procédé de comparaison peut aussi être effectué par détermination de plusieurs courbes de consommation en simultané, identification d'un ou plusieurs modèles les plus proches de ces courbes déterminées et, à cet effet, plusieurs catégories d'installation peuvent par ailleurs être utilisées. En outre, des courbes de consommation de différents effluents (eau, gaz, électricité, etc.) peuvent être déterminées et comparées en simultané.

## Revendications

1. Procédé de comparaison de consommation d'effluents au sein d'installations de souscripteurs (INS), comprenant au moins des étapes de :
a) mesure (300) de consommation d'un effluent au sein d'une installation de souscripteur;
b) stockage (302) des données de mesure de consommation dans une mémoire (MEM) de l'installation;
c) détermination en local (304) d'au moins une courbe de consommation sur la base des données de mesure de consommation stockées ;
d) élaboration collaborative (305) d'un ensemble de modèles de courbes de consommation d'effluent avec la participation d'installations de souscripteurs connectées à un réseau de communication étendu (RES) ;
e) réception (306) de l'ensemble de modèles élaboré via le réseau de communication étendu ;
f) comparaison en local (308) de la courbe déterminée avec l'ensemble de modèles reçu.

2. Procédé selon la revendication 1, dans lequel à l'étape c), la courbe déterminée est en outre caractérisée selon au moins une catégorie d'installation correspondant à ladite installation de souscripteur,
et dans lequel à l'étape f), la courbe déterminée est comparée aux modèles de l'ensemble de modèles élaboré qui correspondent à une catégorie d'installation identique à ladite au moins une catégorie d'installation qui caractérise l'installation du souscripteur.

3. Procédé selon la revendication 1, dans lequel à l'étape f), parmi l'ensemble de modèles élaboré, le modèle le plus proche de la courbe déterminé est identifié indépendamment de catégories d'installations auxquelles correspondent respectivement la courbe déterminée et le modèle identifié.

4. Procédé selon l'une des revendications 1 à 3, dans lequel à l'étape d), lesdits modèles de courbes de consommation d'effluent sont élaborés par itérations successives, auprès de plusieurs installations de souscripteurs connectées audit réseau (RES), d'un ensemble d'étapes comprenant au sein de chaque installation, pour une itération courante :
- une réception (400) de modèles de courbes d'effluent prédéfinis ou mis à jour à l'itération précédente de l'ensemble d'étapes ;
- parmi les modèles reçus, une identification en local (402) du modèle de courbe le plus proche de ladite au moins une courbe déterminée ;
- une construction en local (404) d'une représentation locale chiffrée associant ladite au moins une courbe déterminée avec le modèle de courbe le plus proche identifié ;
- une transmission (405) audit réseau (RES) de ladite représentation locale chiffrée ;
- une participation (406) à la construction d'une représentation globale chiffrée correspondant à une agrégation des représentations locales chiffrées transmises par lesdites plusieurs installations de souscripteurs ;
- un déchiffrement (408) de la représentation globale chiffrée ; et
- une mise à jour (410), pour l'itération suivante de l'ensemble d'étapes, des modèles reçus en fonction des représentations locales chiffrées agrégées ;
dans lequel ladite élaboration de l'ensemble de modèles est fonction de la représentation globale déchiffrée lorsqu'un critère d'arrêt des itérations de l'ensemble d'étapes est atteint.

5. Procédé selon la revendication 4, dans lequel les modèles sont en outre mis à jour selon des catégories d'installation auxquelles correspondent les représentations locales chiffrées agrégées.

6. Procédé selon l'une des revendications 4 ou 5, dans lequel :
- le chiffrement desdites représentations locales et globale est réalisé à partir d'une clé de chiffrement commune aux installations de souscripteurs connectées au réseau de télécommunication étendu (RES), et
- le déchiffrement est réalisé de façon collaborative par un sous-ensemble d'installations de souscripteurs connectées audit réseau (RES), chaque installation du sous-ensemble disposant d'une partie de clé de déchiffrement, les différentes parties constituant la clé de déchiffrement étant réparties entre les installations du sous-ensemble.

7. Procédé selon la revendication 6, dans lequel ladite clé de chiffrement commune est de type homomorphique additif

8. Procédé selon l'une des revendications 4 à 7, dans lequel la construction de la représentation globale chiffrée est réalisée de proche en proche par l'intermédiaire d'une dissémination épidémique des représentations locales chiffrées entre lesdites installations de souscripteurs, via une infrastructure réseau distribuée.

9. Procédé selon l'une des revendications 4 à 8, dans lequel du bruit est introduit dans la représentation globale chiffrée construite avant le déchiffrement réalisé à la fin de l'itération courante dudit ensemble d'étapes.

10. Procédé selon l'une des revendications précédentes, dans lequel chaque modèle correspond à une moyenne de courbes de consommation d'installations de souscripteurs.

11. Produit programme informatique comportant des instructions pour la mise en oeuvre du procédé selon l'une des revendications 1 à 10, lorsque ce programme est exécuté par une unité de traitement de données telle qu'un processeur.

12. Installation de souscripteur comprenant au moins :
- un module de mesure (MES) de consommation d'au moins un effluent ;
- une mémoire (MEM) apte à stocker les données de mesure de consommation du module de mesure (MES) ;
- une interface de communication (COM) avec un réseau de communication étendu (RES) ;
- une unité de traitement de données (UTD) connecté au module de mesure (MES) et à ladite interface de communication (COM) ;
ladite unité de traitement de données (UTD) étant apte à mettre en oeuvre le procédé de comparaison de consommation d'effluents selon l'une des revendications 1 à 10.

13. Installation de souscripteur selon la revendication 12, dans lequel ladite mémoire (MEM) est en outre apte à stocker :
- une clé de chiffrement commune à des installations de souscripteurs connectées au réseau de télécommunication étendu (RES), et
- une partie de clé de déchiffrement, les différentes parties constituant la clé de déchiffrement étant réparties entre lesdites installations connectées audit réseau (RES).

14. Installation de souscripteur selon l'une des revendications 12 ou 13, dans lequel ladite mémoire (MEM) est en outre apte à stocker des paramètres de bruit à introduire sur des données relatives à la consommation mesurée.

15. Installation de souscripteur selon l'une des revendications 12 à 14, ladite installation étant membre, via le réseau de communication étendu (RES), d'une infrastructure réseau de type réseau pair à pair qui comprend une pluralité d'installations de souscripteurs.

## Patentansprüche

1. Verfahren zum Vergleichen des Abwasserverbrauchs in Teilnehmeranlagen (INS), umfassend mindestens die folgenden Schritte:
a) Messen (300) des Abwasserverbrauchs in einer Teilnehmeranlage;
b) Speichern (302) der Verbrauchsmessdaten in einem Speicher (MEM) der Anlage;
c) lokales Bestimmen (304) mindestens einer Verbrauchskurve auf Basis der gespeicherten Verbrauchsmessdaten;
d) kollaboratives Ausarbeiten (305) einer Gesamtheit von Modellen von Abwasserverbrauchskurven unter Beteiligung von Teilnehmeranlagen, die an ein erweitertes Kommunikationsnetz (RES) angeschlossen sind;
e) Erhalt (306) der Gesamtheit von ausgearbeiteten Modellen über das erweiterte Kommunikationsnetz;
f) lokales Vergleichen (308) der bestimmten Kurve mit der erhaltenen Gesamtheit von Modellen.

2. Verfahren nach Anspruch 1, bei dem in Schritt c) die bestimmte Kurve ferner nach mindestens einer Anlagenkategorie entsprechend der Teilnehmeranlage gekennzeichnet wird,
und bei dem in Schritt f) die bestimmte Kurve mit den Modellen der ausgearbeiteten Gesamtheit von Modellen verglichen wird, die einer Anlagenkategorie entsprechen, die mit der mindestens einen Anlagenkategorie, die die Teilnehmeranlage kennzeichnet, identisch ist.

3. Verfahren nach Anspruch 1, bei dem in Schritt f) unter der ausgearbeiteten Gesamtheit von Modellen das der bestimmten Kurve nächste Modell unabhängig von Anlagenkategorien, denen die bestimmte Kurve bzw. das identifizierte Modell entsprechen, identifiziert wird.

4. Verfahren nach einem der Ansprüche 1 bis 3, bei dem in Schritt d) die Modelle von Abwasserverbrauchskurven bei mehreren Teilnehmeranlagen, die an das Netz (RES) angeschlossen sind, durch aufeinanderfolgende Iterationen einer Gesamtheit von Schritten ausgearbeitet werden, die innerhalb jeder Anlage für eine laufende Iteration umfassen:
- einen Erhalt (400) von vordefinierten oder bei der vorhergehenden Iteration der Gesamtheit von Schritten aktualisierten Abwasserkurvenmodellen;
- unter den erhaltenen Modellen eine lokale Identifikation (402) des Kurvenmodells, das der mindestens einen bestimmten Kurve am nächsten ist;
- eine lokale Konstruktion (404) einer chiffrierten lokalen Darstellung, die die mindestens eine bestimmte Kurve mit dem nächsten identifizierten Kurvenmodell verbindet;
- eine Übertragung (405) der chiffrierten lokalen Darstellung an das Netz (RES);
- eine Beteiligung (406) an der Konstruktion einer chiffrierten globalen Darstellung entsprechend einer Zusammenfassung von chiffrierten lokalen Darstellungen, die von den mehreren Teilnehmeranlagen übertragen werden;
- eine Dechiffrierung (408) der chiffrierten globalen Darstellung; und
- eine Aktualisierung (410) der erhaltenen Modelle in Abhängigkeit von den zusammengefassten chiffrierten lokalen Darstellungen für die folgende Iteration der Gesamtheit von Schritten;
wobei die Ausarbeitung der Gesamtheit von Modellen von der dechiffrierten globalen Darstellung abhängt, wenn ein Anhaltekriterium der Iterationen der Gesamtheit von Schritten erreicht ist.

5. Verfahren nach Anspruch 4, bei dem die Modelle ferner nach Anlagenkategorien, denen die zusammengefassten chiffrierten lokalen Darstellungen entsprechen, aktualisiert werden.

6. Verfahren nach einem der Ansprüche 4 oder 5, bei dem:
- die Chiffrierung der lokalen und globalen Darstellungen auf Basis eines Chiffrierschlüssels erfolgt, der den Teilnehmeranlagen, die an das erweiterte Telekommunikationsnetz (RES) angeschlossen sind, gemeinsam ist, und
- die Dechiffrierung auf kollaborative Weise durch eine Untereinheit von Teilnehmeranlagen, die an das Netz (RES) angeschlossen sind, erfolgt, wobei jede Anlage der Untereinheit über einen Teil eines Dechiffrierschlüssels verfügt, wobei die verschiedenen Teile, die den Dechiffrierschlüssel darstellen, zwischen den Anlagen der Untereinheit verteilt sind.

7. Verfahren nach Anspruch 6, bei dem der gemeinsame Chiffrierschlüssel vom additiven homomorphen Typ ist.

8. Verfahren nach einem der Ansprüche 4 bis 7, bei dem die Konstruktion der chiffrierten globalen Darstellung peer-to-peer mit Hilfe einer epidemischen Verbreitung der chiffrierten lokalen Darstellungen zwischen den Teilnehmeranlagen über eine verteilte Netzinfrastruktur erfolgt.

9. Verfahren nach einem der Ansprüche 4 bis 8, bei dem ein Rauschen in die chiffrierte globale Darstellung, die vor der Dechiffrierung konstruiert wurde, die am Ende der laufenden Iteration der Gesamtheit von Schritten erfolgt, eingeleitet wird.

10. Verfahren nach einem der vorhergehenden Ansprüche, bei dem jedes Modell einem Durchschnitt von Verbrauchskurven von Teilnehmeranlagen entspricht.

11. Computerprogrammprodukt, umfassend Instruktionen für den Einsatz des Verfahrens nach einem der Ansprüche 1 bis 10, wenn dieses Programm von einer Datenverarbeitungseinheit, wie einem Prozessor, ausgeführt wird.

12. Teilnehmeranlage, mindestens umfassend:
- ein Modul zum Messen (MES) mindestens eines Abwasserverbrauchs;
- einen Speicher (MEM), der geeignet ist, die Verbrauchsmessdaten des Messmoduls (MES) zu speichern;
- eine Kommunikationsschnittstelle (COM) mit einem erweiterten Kommunikationsnetz (RES);
- eine Datenverarbeitungseinheit (UTD), die an das Messmodul (MES) und die Kommunikationsschnittstelle (COM) angeschlossen ist;
wobei die Datenverarbeitungseinheit (UTD) geeignet ist, das Verfahren zum Vergleichen des Abwasserverbrauchs nach einem der Ansprüche 1 bis 10 einzusetzen.

13. Teilnehmeranlage nach Anspruch 12, bei der der Speicher (MEM) ferner geeignet ist, Folgendes zu speichern:
- einen Chiffrierschlüssel, der Teilnehmeranlagen gemeinsam ist, die an das erweiterte Telekommunikationsnetz (RES) angeschlossen sind, und
- einen Teil eines Dechiffrierschlüssels, wobei die verschiedenen Teile, die den Dechiffrierschlüssel darstellen, zwischen den an das Netz (RES) angeschlossenen Anlagen verteilt sind.

14. Teilnehmeranlage nach einem der Ansprüche 12 oder 13, bei der der Speicher (MEM) ferner geeignet ist, Rauschparameter, die auf mit dem gemessenen Verbrauch zusammenhängenden Daten einzuführen sind, zu speichern.

15. Teilnehmeranlage nach einem der Ansprüche 12 bis 14, wobei die Anlage über das erweiterte Kommunikationsnetz (RES) Mitglied einer Netzinfrastruktur vom Typ Peer-to-Peer-Netzwerk ist, das eine Vielzahl von Teilnehmeranlagen umfasst.

## Claims

1. Method for comparing effluent consumption within subscriber installations (INS), at least including the following steps:
a) measurement (300) of a consumption of an effluent within a subscriber installation;
b) storage (302) of consumption measurement data in a memory (MEM) of the installation;
c) local determination (304) of at least one consumption curve based on the stored consumption measurement data;
d) collaborative production (305) of a set of effluent consumption curve models with the participation of subscriber installations connected to an extended communication network (RES);
e) reception (306) of the set of models produced via the extended communication network;
f) local comparison (308) of the determined curve with the set of models received.

2. Method according to claim 1, wherein in step c), the determined curve is further characterised according to at least one installation category corresponding to said subscriber installation,
and wherein in step f), the determined curve is compared to the models of the set of models produced which correspond to an installation category that is identical to said at least one installation category that characterises the installation of the subscriber.

3. Method according to claim 1, wherein in step f), from among the set of models produced, the model the closest to the determined curve is identified independently from installation categories to which the determined curve and the identified model respectively correspond.

4. Method according to one of claims 1 to 3, wherein in step d), said models of effluent consumption curves are produced via successive iterations, with a plurality of subscriber installations connected to said network (RES), of a set of steps comprising the following, within each installation, for a current iteration:
- a reception (400) of models of effluent curves that are predefined or updated by the previous iteration of the set of steps;
- from among the models received, a local identification (402) of the model of curve the closest to said at least one determined curve;
- a local construction (404) of an encrypted local representation associating said at least one determined curve with the closest model of curve identified;
- a transmission (405) to said network (RES) of said encrypted local representation;
- a participation (406) in the construction of an encrypted general representation corresponding to an aggregation of the encrypted local representations transmitted by said plurality of subscriber installations;
- a decryption (408) of the encrypted general representation; and
- an update (410), for the subsequent iteration of the set of steps, of the models received according to the aggregated encrypted local representations;
wherein said production of the set of models is dependent on the decrypted general representation when a stop criterion for the iterations of the set of steps is reached.

5. Method according to claim 4, wherein the models are furthermore updated according to installation categories to which the aggregated encrypted local representations correspond.

6. Method according to one of claims 4 or 5, wherein:
- the encryption of said local and general representations is performed based on an encryption key common to the subscriber installations connected to the extended telecommunication network (RES), and
- the decryption is collaboratively performed by a subset of subscriber installations connected to said network (RES), each installation of the subset having a part of a decryption key, the different parts forming the decryption key being distributed between the installations of the subset.

7. Method according to claim 6, wherein said common encryption key is an additive homomorphic key.

8. Method according to one of claims 4 to 7, wherein the construction of the encrypted general representation is performed step by step via an epidemic dissemination of the encrypted local representations between said subscriber installations, via a distributed network infrastructure.

9. Method according to one of claims 4 to 8, wherein noise is introduced into the encrypted general representation constructed before the decryption performed at the end of the current iteration of said set of steps.

10. Method according to one of the previous claims, wherein each model corresponds to a mean of consumption curves of subscriber installations.

11. Computer program product including instructions for implementing the method according to one of claims 1 to 10, when this program is run by a data processing unit such as a processor.

12. Subscriber installation comprising at least:
- a measurement module (MES) for measuring the consumption of at least one effluent;
- a memory (MEM) capable of storing consumption measurement data of the measurement module (MES);
- a communication interface (COM) for communicating with an extended communication network (RES);
- a data processing unit (UTD) connected to the measurement module (MES) and to said communication interface (COM);
said data processing unit (UTD) being capable of implementing the method for comparing effluent consumption according to one of claims 1 to 10.

13. Subscriber installation according to claim 12, wherein said memory (MEM) is furthermore capable of storing:
- an encryption key common to subscriber installations connected to the extended telecommunication network (RES), and
- a part of a decryption key, the different parts forming the decryption key being distributed between said installations connected to said network (RES).

14. Subscriber installation according to one of claims 12 or 13, wherein said memory (MEM) is furthermore capable of storing noise parameters to be introduced on data relating to the measured consumption.

15. Subscriber installation according to one of claims 12 to 14, said installation being a member, via the extended communication network (RES), of a network infrastructure of peer-to-peer network type which includes a plurality of subscriber installations.
